# EUROPEAN PATENT APPLICATION

(11) **EP 0 804 870 A1**
(43) Date of publication of application: **05.11.1997**
(21) Application number: 97201006.0
(22) Date of filing: 09.04.1997
(51) Int. Cl.: A01D 34/66, A01B 63/32

(54) **Apparatus for working agricultural crop**

(30) Priority: 03.05.1996 NL 1003030
(71) Applicant: Greenland Nieuw-Vennep B.V., 2153 LR Nieuw-Vennep (NL)
(72) Inventor: van der Marel, Pieter Jan, 2171 DN Sassenheim (NL); Vissers, Hermanus Hendrik, 2451 ZS Leimuiden (NL)
(74) Representative: de Vries, Johannes Hendrik Fokke

(57) **Abstract**

Apparatus for working crop, for example for mowing grass, comprising:
- working means extending along a given width on or above the ground to be worked;
- a frame (12) on which the working means (19) and wheels (17) are provided;
- lifting means (30) for lifting the working means from the ground, said lifting means comprising a single cylinder (31) located mainly centrally with respect to the working means; and
- connection means for connecting the lifting means to the working means, wherein the connection means comprises at least one arm (35) extending mainly parallel to the working means and mainly transverse to the lifting means along at least some distance at both sides thereof, and coupling means (36,37,38) provided at both sides having a maximum length in a first coupled position with and in other positions a decoupled position.

## Description

In Dutch patent application 1002013 not prepublished a mowing apparatus is described wherein the frame comprises a front frame part and a back frame part, wherein between said parts besides guidings also hydraulic cylinders are provided for moving the front and back frame parts with respect to each other and thereby the position of the mowing beam with respect to the ground.

In this known apparatus it appears, however, difficult to lift the mowing beam from an operative position in which this beam follows the mowing field into the lifted position, for example for returning at the edge of a field or for transport on the road. As both the position of the wheels with respect to a possibly unequal ground is not fully known and the mowing beam can be suspended obliquely, for example due to adhearing clay or the like, it appeared to be not really possible, even by means of a complicated synchronisation of the two hydraulic cylinders, to lift the mowing beam without the risk that in an oblique position the high side of the mowing beam is lifted in first instance, whereby the low side thereof is pressed into the ground which is undesired both for the ground as for the mowing device.

The present invention provides an apparatus for working crop, for example for mowing grass, comprising:
- working means extending along a given width on or above the ground to be worked;
- a frame on which the working means and wheels are provided;
- lifting means for lifting the working means from the ground, said lifting means comprising a single cylinder located mainly centrally with respect to the working means;
- and connection means for connecting the lifting means to the working means, wherein the connection means comprises at least one arm extending mainly parallel to the working means and mainly transverse to the lifting means along at least some distance at both sides thereof, and coupling means provided at both sides of the arm and having a first coupled position with maximum length and one or more other decoupled positions.

The apparatus according to the present invention comprises carried, towed and (at the front side) mounted agricultural equipment, such as mowers. The preferred embodiment, however, relates to a towed mowing apparatus, wherein a wheel frame and a main frame are hinging with respect to each other, the mowing device being suspended in operative position to the main frame. The operation and advantages of this mower are described in the above-mentioned Dutch patent application, not pre-published.

The coupling means can comprise mutually hinging links or arms, but also link elements with an oval slot for guiding a pin or bush so that the coupling means can be hanging in a slack manner during the operative position of the mowing device. It is also imaginable that the coupling means comprise a compressible element having a restricted stroke.

Preferably the connection means comprises a ball hinge so that the working means can follow the ground to be worked in a good manner.

Further advantages, features and details of the present invention will be further explained by reference to the following description with reference to the enclosed drawings, in which
Fig. 1 shows a perspective view partially broken-away of a first preferred embodiment of an apparatus according to the present invention;
Fig. 2 a perspective view of detail II of Fig. 1; and
Fig. 3 a perspective view partially in dashed lines of detail II in Fig. 2 in a second position.

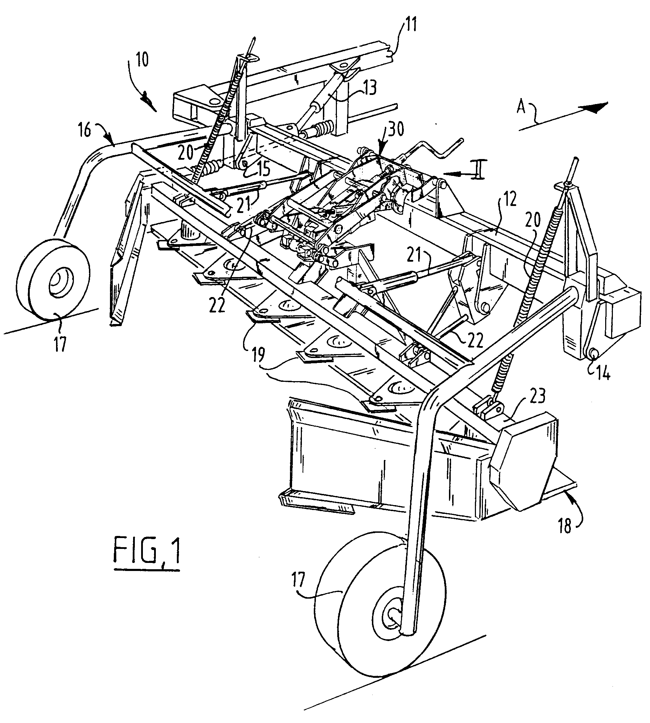

An apparatus 10 (Fig. 1) is towed by a tractor not shown at a towing beam 11 in the direction of the arrow A. The towing beam 11 is hingedly connected to a frame beam 12 mounted in a mainly lying position, while for adjustment of the angle between towing beam 11 and frame beam 12 a hydraulic cylinder 13 is mounted between the same. Through hinging pins 14 and 15 a wheel frame 16 is mounted on frame beam 12, wheels 17 being attached to said wheel frame. A mowing beam 18 provided with mowing means 19, such as for example a disc mower, is suspended through springs 20 to frame beam 12 in order to restrict the pressure of the mowing means on the field. By means of cylinders 21 and guiding rods 22 the mutual position of wheel frame 16 and frame beam 12 can be adjusted within given limits.

Further details of the mutual connection of main frame and wheel frame and adjustment of the same are described in the above-mentioned not pre-published Dutch patent application, the contents of which should be deemed to be incorporated here.

For a uniform lifting from the ground, i.e. as much as possible without one of the ends of the mowing beam 18 being pressed into the ground, a lifting or raising mechanism 30 is provided between frame beam 12 and a beam 23 of a subframe for the mowing beam 18.

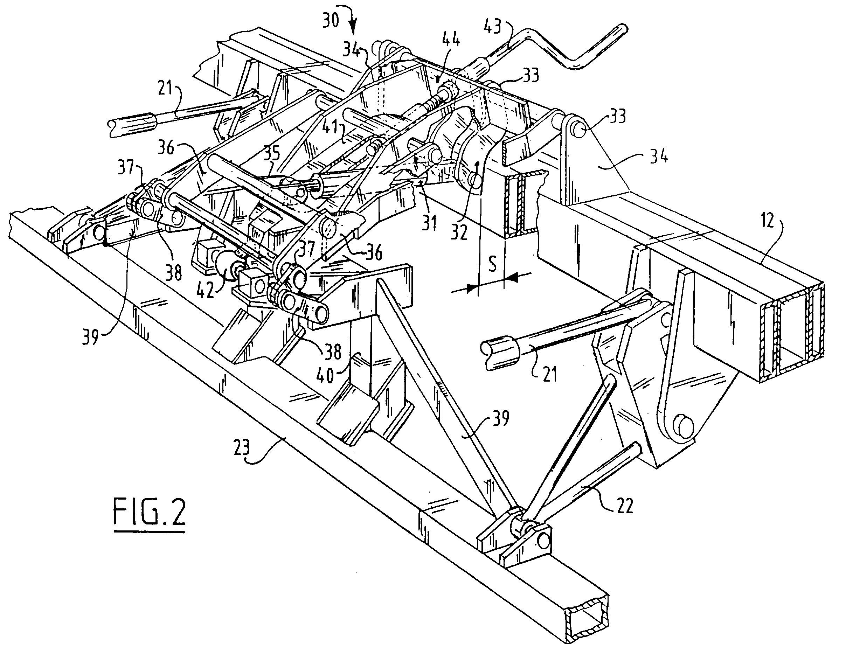

As can be seen especially in Fig. 2, the lifting mechanism 30 comprises a single hydraulic cylinder 31 which at one side is hingedly connected to a somewhat S-shaped or banana-shaped arm 32 which at its other end is hingedly connected to a shaft 33 fixed through supports 34 to the support beam 12. At the other side the hydraulic cylinder 31 is hingedly connected to a transverse arm 35 extending at both sides outwardly with respect to the end of the cylinder. The arm 35 is attached to plates 36, at ends of which a plurality of links 37, 38 of a chain or mutually hinging arms are provided. In the position shown in Fig. 2 these links 37 and 38 are hanging slack, in which position the cylinder 31 is not operative and can be unpressurized. To further strengthen the connection between frame beam 12 and subframe beam 23 oblique plates 39 are attached to both sides of frame beam 23, said plates extending upwardly upto upright support beam 40.

Further Fig. 2 shows that the hydraulic cylinder 31 extends through an adjustment means 41 which therefore is provided with slots and which on the one side is coupled hingedly to subframe beam 23 through hinge 42, preferably made as ball hinge, and at the other side is adjustably connected with plate 44 through adjustment crank 43 with screw end, said plate being hingedly mounted on frame beam 12.

By rotating the crank 23 the distance between the subframe beam 23 and the frame beam 12 can be adjusted.

In the position shown in Figs. 1 and 2 the lifting mechanism has no function in that, as during normal mowing operation, the mowing beam 18 can follow the ground through sliding means and the mechanism 30 allows the required movements of the frame beam 23 with respect to the frame beam 12.

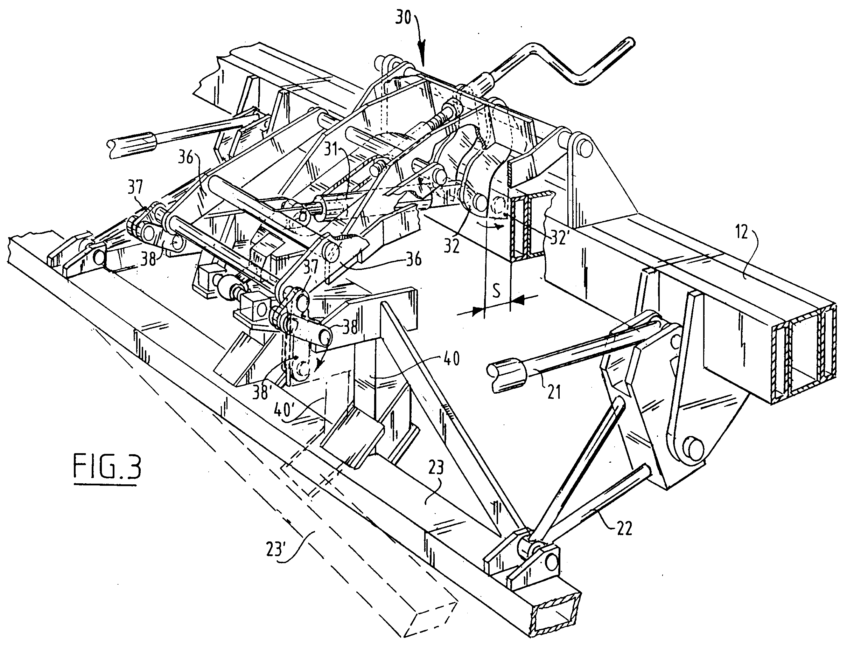

If mowing beam 18 must be lifted from the ground, for example for turning and/or for transportation on the road, cylinder 31 is actuated (see Fig. 3) whereby firstly arm 32 moves along stroke S and engages beam 12 and subsequently plates 36 are pressed upwardly until at at least one of the sides the links 37, 38 (38' and 40 in Fig. 3) will become tightened and subframe beam 23 (23' in oblique position) will be lifted first at that side. During the further lifting of the frame beam 23 also the links 37 and 38 at the other side will become tightened, whereafter the mowing beam will be lifted mainly horizontally or at least parallel to the frame beam 12, without having one of the ends of the mowing beam 18 pressed into the ground during this operation.

The present invention is not restricted to the abovedescribed preferred embodiment of the same. The scope of protection is determined by the following claims. A not restrictive embodiment within the scope of the claims relates for example to a towed mower wherein the engaging point of the tractor is located substantially in the middle of the mowing device.

## Claims

1. Apparatus for working crop, for example for mowing grass, comprising:
- working means extending along a given width on or above the ground to be worked;
- a frame on which the working means and wheels are provided;
- lifting means for lifting the working means from the ground, said lifting means comprising a single cylinder located mainly centrally with respect to the working means; and
- connection means for connecting the lifting means to the working means, wherein the connection means comprises at least one arm extending mainly parallel to the working means and mainly transverse to the lifting means along at least some distance at both sides thereof, and coupling means provided at both sides of the arm and having a first coupled position with maximum length and one or more other decoupled positions.

2. Apparatus according to claim 1, wherein the frame comprises a main frame including a beam mounted mainly lying, and a wheel frame provided with two or more wheels.

3. Apparatus according to claim 1, wherein the main frame and the wheel frame are hingedly coupled to each other.

4. Apparatus according to claim 1, 2 or 3, wherein the lifting means are mounted between a main frame and a subframe for the working means.

5. Apparatus according to anyone of claims 1-4, comprising adjusting means for adjusting the position of a subframe for the working means and a main frame.

6. Apparatus according to anyone of claims 1-5, wherein the coupling means comprise at least two mutually hinged arms or links.

7. Apparatus according to anyone of the preceding claims, wherein the cylinder is connected to a main frame through a hinging arm.

8. Apparatus according to claim 7, wherein the hinging arm is mainly S-shaped.

9. Apparatus according to anyone of the preceding claims, wherein the working means and the frame for the same are towable.

10. Apparatus according to anyone of the preceding claims, wherein the working means and the frame for the same are mountable.

11. Apparatus according to anyone of the preceding claims, wherein the connection means comprises a ball hinge.
